# EUROPÄISCHE PATENTSCHRIFT

(11) **EP 1 512 951 B1**
(45) Veröffentlichungstag und Bekanntmachung des Hinweises auf die Patenterteilung: **27.07.2011**
(21) Anmeldenummer: 04020863.9
(22) Anmeldetag: 02.09.2004
(51) Int. Cl.: G01K 1/08

(54) **Verfahren zur Herstellung eines feuchtedichten Fühlers**
Method of manufacturing an impervious sensor
Méthode de fabrication d'une sonde étanche

(30) Priorität: 03.09.2003 DE 10340636
(43) Veröffentlichungstag der Anmeldung: 09.03.2005
(73) Patentinhaber: EPCOS AG, 81669 München (DE)
(72) Erfinder: Strallhofer, Heinz, 8530 Deutschlandsberg (AT); Kloiber, Gerald, 8073 Feldkirchen (AT)
(74) Vertreter: Epping - Hermann - Fischer

(56) Entgegenhaltungen:
- EP-A- 0 291 187
- EP-A- 0 691 705
- DE-C- 19 631 376
- GB-A- 2 159 663
- JP-A- 9 159 542

## Beschreibung

Die Erfindung betrifft ein Verfahren zum Herstellen eines feuchtedichten Fühlers, vorzugsweise Temperaturfühlers.

Solche Fühler werden z. B. auf dem Gebiet der Klimatechnik verwendet, wobei insbesondere zur Temperaturerfassung in Gefrier- und Kühlgeräten feuchtedichte Temperatursensoren mit Anschlußleitungen benötigt werden.

Ein bekannter Fühler weist einen Fühlkopf auf, der elektrisch mit Aderleitungen einer Kunststoffmantelleitung verbunden und mechanisch an einem abisolierten Ende dieser Leitungen befestigt wird.

Der Fühlkopf wird meist in Kunststoff- oder Metallhülsen angeordnet und mit einem Vergußmaterial (z. B. Epoxyharz) vergossen. Im Bereich der Schnittstelle zwischen dem Kabelmantel und dem Verguß bzw. Sensorgehäuse tritt das Problem der Abdichtung des Fühlkopfs gegen Feuchtigkeit auf.

Es wurde bereits versucht, dieses Problem durch Aufbringen von zusätzlichen Abdichtelementen, z. B. Schrumpfschläuchen, oder durch Verkleben der Schnittstelle zu lösen, wobei die bekannten Lösungen meist aufwendig und nur bedingt zufriedenstellend sind.

In der Druckschrift DE 4423985 A1 ist ein Verfahren zur Herstellung von Sensoren für Kühl- und Gefriergeräte in Spritzgußtechnologie beschrieben, wobei zwischen der Kabelisolierung und dem Fühlkopf eine feuchtedichte Verbindung im Spritzgußverfahren hergestellt wird. Dieses Verfahren ist allerdings aufwendig und teuer.

Aus der Druckschrift EP 1213572 A1 ist ein ähnliches Verfahren zur Herstellung eines feuchtedichten Fühlers bekannt, bei dem vor dem Auftragen des Vergusses um den Fühlkopf eine zylinderförmige Schutzumhüllung aufgetragen wird. Die Schutzumhüllung erhöht die seitliche Stabilität des Fühlkopfes.

Aus der Druckschrift DE 19631376 C1 und US 4873758 ist jeweils ein Verfahren zur Herstellung eines feuchtedichten Fühlers bekannt, bei dem der Kabelmantel einer Kunststoffkabelleitung zur Abdichtung eines Fühlkopfs benutzt wird. Zunächst wird ein Thermistor an abisolierten Enden einer Kunststoffmantelleitung befestigt. Anschließend wird an freien Enden der Aderleiter eine Zugkraft ausgeübt, wobei die Aderleiter zusammen mit dem Thermistor gegen den Kabelmantel verschoben werden, bis sich der Thermistor vollständig im Kabelmantel befindet. Danach wird das entsprechende offene Ende des Kabelmantels feuchtedicht verschweißt. Diese Lösung hat insbesondere bei langen Kabeln den Nachteil, daß beim Verschieben des Thermistors gegen den Kabelmantel undefinierte, hohe Kräfte auftreten, wobei der Fühlkopf bzw. die Schnittstelle zwischen dem Fühlkopf und den Aderleitern beschädigt werden kann.

Aufgabe der vorliegenden Erfindung ist es, ein weiteres, einfach einzusetzendes Verfahren zum Herstellen eines feuchtedichten Fühlers anzugeben.

Diese Aufgabe wird erfindungsgemäß durch ein Verfahren mit den Merkmalen von Anspruch 1 gelöst. Vorteilhafte Ausgestaltungen der Erfindung sind aus weiteren Ansprüchen zu entnehmen.

Die Erfindung gibt ein Verfahren zur Herstellung eines feuchtedichten Fühlers mit folgenden Schritten an. Zunächst wird am fühlkopfseitigen Ende eines Kabels bzw. einer Kunststoffmantelleitung, die einen Kabelmantel und zumindest zwei elektrisch durch Aderisolierung voneinander isolierte Aderleitungen aufweist, der Kabelmantel eingeschnitten und die so entstandenen Hälften des Kabelmantels zurückgeklappt.

Die Aderleitungen werden nachgeschnitten, abisoliert und mit einem Fühlkopf elektrisch und mechanisch fest verbunden. Die Hälften des Kabelmantels werden wieder zusammengeklappt.

Anschließend wird der Kabelmantel im Bereich der Schnittstelle zwischen den Hälften des Kabelmantels hermetisch dicht verschlossen. Die Schmelztemperatur der Aderisolierung ist T₂.

Der Kabelmantel besteht aus einem thermoplastischen und elektrisch isolierenden Material, vorzugsweise Kunststoff, mit einer Schmelztemperatur T₁.

Beim Verschließen der Kabelmantelhälften werden die thermoplastischen Eigenschaften des Materials des Kabelmantels ausgenutzt. Dabei wird zumindest die Schnittstelle zwischen den Hälften des Kabelmantels einer thermischen Behandlung bei einer Temperatur T > T₁ ausgesetzt, wobei die zusammengefügten Bereiche des Kabelmantels anschmelzen und dadurch miteinander eine hermetisch dichte Verbindung bilden. Die notwendige Erwärmung kann z. B. durch Anlegen eines zweiteiligen temperierbaren Werkzeugs erfolgen. Dabei verschmilzt der Kabelmantel an dem fühlkopfseitigen Ende.

Alternativ ist eine Verschweißung der Schnittflächen der Kabelmantelhälften mit einem Schweißgerät möglich.

Der Vorteil der Erfindung liegt darin, daß ein in hohem Maße feuchtedichter Fühler kostengünstig hergestellt werden kann. Da der Kabelmantel nach dem Kontaktieren des Fühlkopfs feuchtedicht verschlossen wird, wobei die Abdichtfunktion alleine von der Kabelisolierung übernommen wird, kann auf weitere Abdichtelemente wie z. B. Hülsen, Verguß, Schrumpfschlauch oder Kunststoffgranulat am Fühlköpf verzichtet werden.

In einer vorteilhaften Variante der Erfindung wird zusätzlich die Abdichtung des Fühlkopfs auf der Seite der Zuleitungen dadurch erreicht, daß zumindest die Schnittstelle der Kabelmantelhälften einer thermischen Einwirkung bei der Temperatur T > T₂ ausgesetzt wird, wobei die Aderisolierung zumindest an der Oberfläche aufschmilzt und vorzugsweise allseitig mit dem Kabelmantel eine hermetisch dichte Verbindung bildet. Dabei wird vorteilhafterweise das Eindringen von Feuchtigkeit zum Fühlkopf vom offenen Ende des Kabels her entlang elektrischer Zuleitungen (Aderleitungen) an der Grenzfläche zwischen Aderisolierung und Kabelmantel unterbunden.

Als Fühlkopf wird vorzugsweise ein Temperatursensor, z. B. ein Thermistor und insbesondere ein NTC-Element (Negative Temperature Coefficient Element) eingesetzt.

Im folgenden wird die Erfindung anhand von Ausführungsbeispielen und der dazugehörigen Figuren näher erläutert. Es zeigen schematisch:
Figur 1 den Verfahrensschritte eines erfindungsgemäßen Verfahrens zur Herstellung eines feuchtedichten Fühlers;
Figur 2 Verfahrensschritte eines weiteren erfindungsgemäßen Verfahrens zur Herstellung eines feuchtedichten Fühlers.

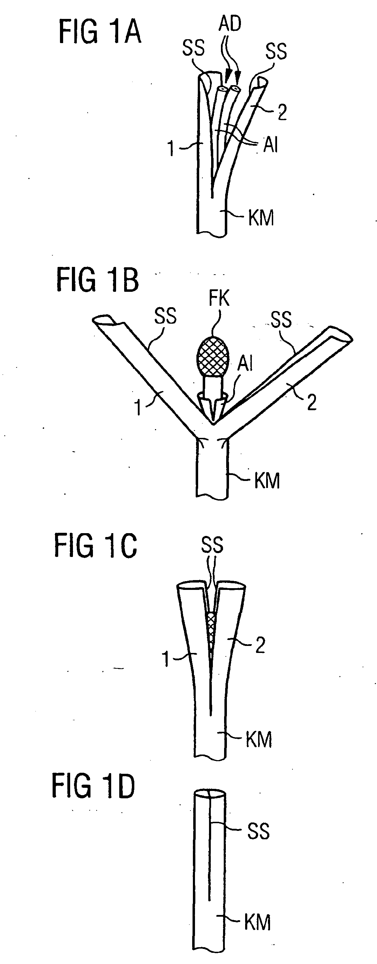

Figur 1 zeigt schematisch Verfahrensschritte eines erfindungsgemäßen Verfahrens zur Herstellung eines feuchtedichten Fühlers.

Die Aderleitungen AD eines doppelt isolierten Kabels sind jeweils mit einer Aderisolierung AI, die aus einem elektrisch isolierenden Material besteht, gegeneinander isoliert. Der Verbund der Aderleitungen AD ist von einem Kabelmantel KM umgeben.

Figur 1 a) zeigt, daß der Kabelmantel KM des Kabels, das zwei Aderleitungen AD aufweist, in einem zur Anordnung eines Fühlkopfs FK vorgesehenen Bereich eingeschnitten wird. Dabei entstehen zwei Hälften 1 und 2 des Kabelmantels KM.

In Figur 1 b) ist angedeutet, daß die Hälften 1 und 2 zurückgeklappt und die Aderleitungen entsprechend der Größe des Fühlkopfs nachgeschnitten und abisoliert werden. Beim Nachschneiden der Aderleitungen wird die abgeschnittene Länge der Aderleitungen AD dabei gemessen an der Länge des Fühlkopfs FK und der Länge des Einschnitts bzw. der Schnittstelle SS so gewählt, daß der Fühlkopf FK beim späteren Zusammenklappen der Hälften 1 und 2 durch den Kabelmantel KM umschlossen wird.

Der Fühlkopf FK wird elektrisch und mechanisch fest z. B. durch Löten, Schweißen oder Crimpen mit den Aderleitungen verbunden.

Figur 1 c) zeigt das Zusammenklappen der Hälften 1 und 2.

Die Schnittstelle SS wird bis zu einer Temperatur T erwärmt, welche zumindest die Schmelztemperatur T₁ des Materials des Kabelmantels KM etwas übersteigt. Das Material im Bereich der Schnittflächen der Hälften 1 und 2 schmilzt, wobei eine hermetisch dichte Verbindung der beiden Hälften des Kabelmantels zustande kommt.

In Figur 1 d) ist der Fühler mit einem hermetisch verschlossenen Fühlkopf nach dem Verbinden der beiden Hälften des Kabelmantels KM gezeigt.

Der Kabelmantel liegt vorzugsweise dicht am Fühler an. Die hermetische Abdichtung umfaßt auch ein Verschmelzen des Kabelmantels an der fühlkopfseitigen Spitze, so daß der Fühler vollständig eingeschmolzen ist.

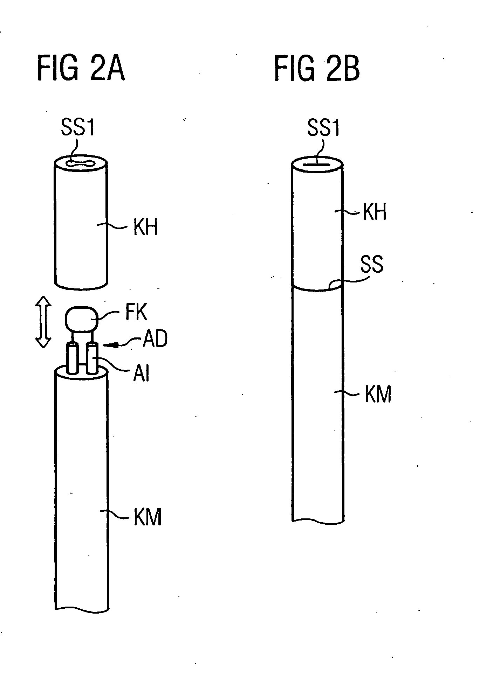

Figur 2 zeigt Verfahrensschritte eines weiteren erfindungsgemäßen Verfahrens zur Herstellung eines feuchtedichten Fühlers.

In dieser Variante der Erfindung wird der Kabelmantel KM am fühlkopfseitigen Ende des Kabels an einem Ende entlang einer Schnittstelle SS quer zu den Aderleitungen AD eingeschnitten. Die dabei gebildete Kabelmantel-Hülse KH wird abgezogen. Die Aderleitungen AD werden ggf. nachgeschnitten, abisoliert und mit einem Fühlkopf FK elektrisch und mechanisch fest verbunden, siehe Figur 2 a). Die Gesamtlänge der Aderleitungen AD zusammen mit dem Fühlkopf FK wird dabei kleiner als die Länge der Kabelmantel-Hülse KH eingestellt.

Die Kabelmantel-Hülse KH kann prinzipiell auch vom anderen Kabelende oder von einer anderen Leitung mit einem passenden Durchmesser stammen. Wenn die Hülsenlänge entsprechend gewählt ist, ist das Nachschneiden der Aderleitungen AD nicht erforderlich.

Die Kabelmantel-Hülse KH wird auf die Aderleitungen AD mit dem Fühlerkopf FK aufgesetzt. Anschließend wird einerseits die Kabelmantel-Hülse KH entlang der Schnittstelle SS hermetisch dicht mit dem Kabelmantel KM verbunden und andererseits das offene Ende SS1 der Kabelmantel-Hülse KH hermetisch dicht verschlossen, siehe Figur 2 b). Vorzugsweise wird dabei die Kabelmantel-Hülse im Bereich des offenen Endes zusammengepreßt und die so zusammengefügten Teile der Kabelmantel-Hülse verschweißt.

Zur Herstellung der Abdichtung des Fühlerkopfes FK wird die Schnittstelle SS und das offene Ende SS1 einer thermischen Einwirkung bei einer Temperatur T > T₁ ausgesetzt, wobei T₁ die Schmelztemperatur des Kabelmantels KM ist.

Diese Variante der Erfindung hat gegenüber dem aus der Druckschrift DE 19631376 C1 bekannten Verfahren den Vorteil, daß der Fühlkopf nicht durch die ganze Länge des Kabelmantels geschoben wird, sondern nur durch die vergleichsweise kurze Kabelmantel-Hülse.

Die Erfindung ist nicht auf das schematisch dargestellte Verfahren beschränkt. Es ist möglich, Elemente wie z. B. Aderleitungen oder Fühlköpfe in beliebiger Anzahl und Formgebung herzustellen. Ein erfindungsgemäßes Verfahren ist auch nicht auf bestimmte Materialien oder Fühler beschränkt.

### Bezugszeichenliste

- FK: Fühlkopf
- AD: Aderleitung
- AI: Aderisolierung
- KM: Kabelmantel der Kabelleitung
- 1, 2: die Hälften des Kabelmantels
- KH: Kabelmantel-Hülse
- SS: Schnittstelle
- SS1: offenes Ende der Kabelmantel-Hülse

## Patentansprüche

1. Verfahren zur Herstellung eines feuchtedichten Fühlers mit folgenden Schritten:
- am fühlkopfseitigen Ende eines Kabels, das einen Kabelmantel (KM) und isolierte Aderleitungen (AD) aufweist, wird der Kabelmantel (KM) von einem Ende her entlang der Aderleitungen (AD) auf einer gegebenen Länge eingeschnitten und die so entstandenen Hälften (1, 2) des Kabelmantels (KM) zurückgeklappt,
- die Aderleitungen (AD) werden nachgeschnitten, abisoliert und mit einem Fühlkopf (FK) elektrisch und mechanisch fest verbunden, wobei die Gesamtlänge der Aderleitungen (AD) zusammen mit dem Fühlkopf (FK) kleiner als die Länge des Kabelmantels (KM) eingestellt wird,
- die Hälften (1, 2) des Kabelmantels (KM) werden wieder zusammengefügt,
- zumindest die Schnittstelle (SS) zwischen den Hälften (1, 2) des Kabelmantels (KM) wird einer thermischen Einwirkung bei einer Temperatur T > T₁ ausgesetzt, wobei T₁ die Schmelztemperatur des Kabelmantels (KM) ist, wobei eine hermetisch dichte Verbindung beider Hälften (1, 2) des Kabelmantels (KM) entsteht und der Kabelmantel (KM) an dem fühlkopfseitigen Ende verschmilzt.

2. Verfahren zur Herstellung eines feuchtedichten Fühlers mit folgenden Schritten:
- am fühlkopfseitigen Ende eines Kabels, das einen Kabelmantel (KM) und isolierte Aderleitungen (AD) aufweist, wird der Kabelmantel (KM) entlang einer Schnittstelle (SS) quer zu den Aderleitungen (AD) eingeschnitten und ein so gebildetes Kabelmantel-Stück abgezogen,
- eine Kabelmantel-Hülse (KH) wird zur Verfügung gestellt, deren innerer Durchmesser dem Durchmesser des Kabelmantels (KM) entspricht,
- die Aderleitungen (AD) werden abisoliert und mit einem Fühlkopf (FK) elektrisch und mechanisch fest verbunden, wobei die Gesamtlänge der Aderleitungen (AD) zusammen mit dem Fühlkopf (FK) kleiner als die Länge der Kabelmantel-Hülse (KH) eingestellt wird,
- die Kabelmantel-Hülse (KH) wird auf die Aderleitungen (AD) mit dem Fühlkopf (FK) aufgesetzt,
- die Kabelmantel-Hülse (KH) wird entlang der Schnittstelle (SS) hermetisch dicht mit dem Kabelmantel (KM) verbunden,
- das offene Ende (SS1) der Kabelmantel-Hülse (KH) wird hermetisch dicht verschlossen
wobei zur Herstellung der Abdichtung des Fühlkopfes (FK) die Schnittstelle (SS) und das offene Ende (SS1) einer thermischen Einwirkung bei einer Temperatur T > T₁ ausgesetzt wird, wobei T₁ die Schmelztemperatur des Kabelmantels (KM) ist.

3. Verfahren nach Anspruch 2,
bei dem die Kabelmantel-Hülse (KH) durch das abgezogene Kabelmantel-Stück gebildet ist.

4. Verfahren nach Anspruch 1 oder 2,
bei dem zumindest die Schnittstelle (SS) einer thermischen Einwirkung bei einer Temperatur T, die größer als die Temperatur T₁ und größer als die Schmelztemperatur T₂ der Aderisolierung (AI) ist, so lange ausgesetzt wird, daß die Aderisolierung (AI) zumindest an der Oberfläche aufschmilzt und allseitig mit dem Kabelmantel (KM) eine hermetisch dichte Verbindung bildet.

5. Verfahren nach einem der Ansprüche 1 bis 4,
bei dem als Fühlkopf (FK) ein Temperatursensor eingesetzt wird.

6. Verfahren nach einem der Ansprüche 1 bis 5,
bei dem als Fühlkopf (FK) ein Thermistor verwendet wird.

7. Verfahren nach Anspruch 6,
bei dem als Fühlkopf (FK) ein Negative Temperature Coefficient Element verwendet wird.

## Claims

1. Method for producing a moisture-proof sensor, having the following steps:
- at the sensing-head-side end of a cable which has a cable sheath (KM) and insulated wire leads (AD) the cable sheath (KM) is incised, starting from one end, along the wire leads (AD) to a given length and the halves (1, 2) of the cable sheath (KM) which are thus produced are folded back,
- the wire leads (AD) are cut back, stripped of insulation and permanently connected electrically and mechanically to a sensing head (FK), the total length of the wire leads (AD) together with the sensing head (FK) being adjusted to be smaller than the length of the cable sheath (KM),
- the halves (1, 2) of the cable sheath (KM) are reassembled, and
- at least the interface (SS) between the halves (1, 2) of the cable sheath (KM) is exposed to a thermal action at a temperature T > T₁, T₁ being the melting temperature of the cable sheath (KM), a hermetically tight connection of the two halves (1, 2) of the cable sheath (KM) resulting, and the cable sheath (KM) being fused at the sensing-head-side end.

2. Method for producing a moisture-proof sensor, having the following steps:
- at the sensing-head-side end of a cable which has a cable sheath (KM) and insulated wire leads (AD), the cable sheath (KM) is incised along an interface (SS) transverse to the wire leads (AD) and a cable sheath piece thus formed is removed,
- a cable sheath sleeve (KH) is made available whose inside diameter corresponds to the diameter of the cable sheath (KM),
- the wire leads (AD) are stripped of insulation and permanently connected electrically and mechanically to a sensing head (FK), the total length of the wire leads (AD) together with the sensing head (FK) being adjusted to be smaller than the length of the cable sheath sleeve (KH),
- the cable sheath sleeve (KH) is mounted on the wire leads (AD) with the sensing head (FK),
- the cable sheath sleeve (KH) is connected to the cable sheath (KM) in a hermetically tight fashion along the interface (SS),
- the open end (SS1) of the cable sheath sleeve (KH) is sealed in a hermetically tight fashion, and
in order to produce the seal of the sensing head (FK) the interface (SS) and the open end (SS1) being exposed to a thermal action at a temperature T > T₁, T₁ being the melting temperature of the cable sheath (KM).

3. Method according to Claim 2, in which the cable sheath sleeve (KH) is formed by the removed cable sheath piece.

4. Method according to Claim 1 or 2, in which at least the interface (SS) is exposed to a thermal action at a temperature T which is greater than the temperature T₁ and greater than the melting temperature T₂ of the core insulation (AI) until the core insulation (AI) fuses, at least at the surface, and forms a hermetically tight connection all round together with the cable sheath (KM).

5. Method according to one of Claims 1 to 4, in which a temperature sensor is used as sensing head (FK).

6. Method according to one of Claims 1 to 5, in which a thermistor is used as sensing head (FK).

7. Method according to Claim 6, in which a negative temperature coefficient element is used as sensing head (FK).

## Revendications

1. Procédé de fabrication d'une sonde étanche à l'humidité, le procédé comportant les étapes suivantes :
à l'extrémité côté tête sensible d'un câble qui présente une enveloppe de câble (KM) et des fils conducteurs isolés (AD), l'enveloppe de câble (KM) est découpée depuis une extrémité et sur une longueur donnée le long des fils conducteurs (AD), les moitiés (1, 2) de l'enveloppe de câble (KM) ainsi obtenues étant rabattues,
les fils conducteurs (AD) sont découpés, dénudés et solidarisés électriquement et mécaniquement avec une tête sensible (FK), la longueur totale des fils conducteurs (AD) et de la tête sensible (FK) étant inférieure à la longueur de l'enveloppe de câble (KM),
les moitiés (1, 2) de l'enveloppe de câble (KM) sont réunies et
au moins l'interface (SS) entre les moitiés (1, 2) de l'enveloppe de câble (KM) subit une action thermique à une température T > T₁, T₁ étant la température de fusion de l'enveloppe de câble (KM), ce qui fournit une liaison étanche hermétique des deux moitiés (1, 2) de l'enveloppe de câble (KM), l'enveloppe de câble (KM) fondant à l'extrémité côté tête sensible.

2. Procédé de fabrication d'une sonde étanche à l'humidité, le procédé comportant les étapes suivantes :
à l'extrémité côté tête sensible d'un câble qui présente une enveloppe de câble (KM) et des fils conducteurs isolés (AD), l'enveloppe de câble (KM) est découpée transversalement par rapport au fil conducteur (AD) le long d'une interface (SS) et le morceau d'enveloppe de câble ainsi formé est retiré,
un manchon (KH) d'enveloppe de câble dont le diamètre intérieur correspond au diamètre de l'enveloppe de câble (KM) est préparé,
les fils conducteurs (AD) sont dénudés et ils sont solidarisés électriquement et mécaniquement avec une tête sensible (FK), la longueur totale des fils conducteurs (AD) et de la tête sensible (FK) étant inférieure à la longueur du manchon (KH) d'enveloppe de câble,
le manchon (KH) d'enveloppe de câble est placé sur les fils conducteurs (AD) reliés à la tête sensible (FK),
le manchon (KH) d'enveloppe de câble est relié de manière hermétiquement étanche à l'enveloppe de câble (KM) le long de l'interface (SS),
l'extrémité ouverte (SS1) du manchon (KH) d'enveloppe de câble est fermée de manière hermétiquement étanche et
pour réaliser l'étanchéité de la tête sensible (FK), l'interface (SS) et l'extrémité ouverte (SS1) sont exposées à une action thermique à une température T > T₁, T₁ étant la température de fusion de l'enveloppe de câble (KM).

3. Procédé selon la revendication 2, dans lequel le manchon (KH) d'enveloppe de câble est formé par le morceau d'enveloppe de câble qui a été retiré.

4. Procédé selon les revendications 1 ou 2, dans lequel au moins l'interface (SS) est exposée à une action thermique à une température T supérieure à la température T₁ et supérieure à la température de fusion T₂ de l'isolation (AI) des fils jusqu'à ce que l'isolation (AI) des fils fonde au moins en surface et forme sur tous ses côtés une liaison hermétiquement étanche avec l'enveloppe de câble (KM).

5. Procédé selon l'une des revendications 1 à 4, dans lequel une sonde de température est utilisée comme tête sensible (FK).

6. Procédé selon l'une des revendications 1 à 5, dans lequel un thermistor est utilisé comme tête sensible (FK).

7. Procédé selon la revendication 6, dans lequel un élément à coefficient de température négative est utilisé comme tête sensible (FK).
